# EUROPEAN PATENT APPLICATION

(11) **EP 1 848 179 A1**
(43) Date of publication of application: **24.10.2007**
(21) Application number: 07001552.4
(22) Date of filing: 25.01.2007
(51) Int. Cl.: H04L 29/08

(54) **Presence-enabled property management system**

(30) Priority: 31.03.2006 US 394785
(71) Applicant: Alcatel Lucent, 75008 Paris (FR)
(72) Inventor: Jachner, Jack, Lexington, MA 02420 (US)
(74) Representative: Schäfer, Wolfgang

(57) **Abstract**

A presence-enabled property management system (PMS) (200) facilitates management of a physical property containing a plurality of rooms individually associable with one or more users of the property. The presence-enabled PMS (200) includes a plurality of PMS services (220) available to the users, a presence server (160) for maintaining respective presence information (18000on presentities (110) associated with the presence-enabled PMS (220) and providing the presence information (180) in real-time to watchers (170) of the presentities (110), and a presence connector (230) in communication with the PMS services (220) to provide the presence information (180) to the presence server (160). The presence information (180) for each of the presentities (110) defines respective presence states of one or more of the PMS services (220).

## Description

### BACKGROUND OF THE INVENTION

### Technical Field of the Invention

The present invention relates in general to a presence-based communication system, and in particular, to a presence-enabled property management system.

### Description of Related Art

Property Management Systems (PMS) integrate the management and accounting of guest services, such as guest check-in and check-out, electronic room keys, telephone, Internet, text messaging, voice mail, wake-up calls, housekeeping, in-room dining, mini-bar, pay-per-view TV, customer billing and other hospitality-related services. Although property management systems are most commonly associated with hotels/motels, such systems can also be found in university dorms, hospitals, apartment buildings, storage facilities, office buildings and other similar facilities.

The property management systems that are currently deployed in hotels and other facilities are today closed and proprietary systems that require costly integration with other systems. For example, telephone systems, such as Alcatel OmniPCX, must be separately integrated to each PMS via a mutually agreed and tested application program interface (API) or via middleware produced by a middleware provider that is capable of translating between proprietary vendor protocols. Existing property management systems also have proprietary user interfaces with limited accessibility to customers/guests, and little or no off-site accessibility.

Therefore, what is needed is a PMS that is easily integrated with other systems. In addition, what is needed is a user interface for a PMS that is easily accessible to guests, administrators and other personnel on-site or off-site.

### SUMMARY OF THE INVENTION

Embodiments of the present invention provide a presence-enabled property management system (PMS) for managing a physical property containing a plurality of rooms individually associable with one or more users of the property. The presence-enabled PMS includes a plurality of PMS services available to the users, a presence server operable to maintain respective presence information on presentities associated with the presence-enabled PMS and to provide the presence information in real-time to watchers of the presentities, and a presence connector in communication with the PMS services to provide the presence information to the presence server. The presence connector communicates with the presence server using a standard presence protocol (e.g., SIP/SIMPLE), thereby easing integration with other systems (e.g., systems providing PMS services) and enhancing the operation and accessibility of the PMS.

The presence information on each of the presentities defines respective presence states for one or more of the PMS services. Examples of PMS services include a room check-in service, a room check-out service, a room change service, in-room phone service, Internet service, housekeeping service, in-room dining service, in-room mini-bar service, in-room pay per view service, a text message service, a voice mail service, a wake-up call service, a spa service, a salon service, a billing service and other hospitality services. The presence state of a particular PMS service identifies hospitality information associated with that PMS service for a particular presentity. As an example, the presence state of an in-room dining service can be "order placed," "order delivered" or "wait time for delivery."

Each presentity can be either a user, a room or a PMS service. For example, if a particular presentity is a room, the presence information of that room can include the presence state of several PMS services associated with the room, such as whether a user has checked into the room, the current status of any in-room dining service ordered for that room, whether housekeeping has finished cleaning the room and whether a mini-bar or pay-per-view purchase has been made in the room. As another example, if a particular presentity is a user, the presence information of that user can include the presence state of several PMS services associated with the user, such as what room the user is currently checked into, whether the user has moved rooms, the current status of any in-room dining service ordered by the user, whether housekeeping has finished cleaning the user's room and whether a mini-bar or pay-per-view purchase has been made by the user.

In addition, each watcher can be either a user, a PMS service or an administrator of the PMS. In one embodiment, the presence server provides the presence information of one or more presentities to a presence user client running on a terminal operated by a watcher. The presence information is displayed to the watcher on a display of the terminal. For example, if a particular watcher is a user, the user can view the presence information associated with the room and/or the user on the user's terminal. For example, the user's terminal can display whether the room has been cleaned, the estimated time for delivery of in-room dining service, the current value of the user's bill, reservations for a restaurant, spa or salon and the presence state of other PMS services.

In a further embodiment, the terminal includes a graphical user interface that enables the watcher to invoke one or more PMS services using the displayed presence information. For example, if the watcher is a user, the graphical user interface on the user's terminal can enable the user to access various PMS services by providing links to e-mail addresses or URL addresses for the various PMS services, such as housekeeping, in-room dining, restaurants, spa, salon, billing, check-in, check-out and other PMS services.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system in accordance with embodiments of the present invention;
FIGURE 2 illustrates an exemplary presence-enabled property management system, in accordance with embodiments of the present invention;
FIGURE 3 is a watcher terminal illustrating an exemplary graphical user interface displaying exemplary presence information in a presence-enabled property management system, in accordance with embodiments of the present invention;
FIGURE 4 is a watcher terminal illustrating another exemplary graphical user interface displaying other exemplary presence information in a presence-enabled property management system, in accordance with embodiments of the present invention; and
FIGURE 5 is a flowchart illustrating an exemplary process for implementing a presence-enabled property management system, in accordance with embodiments of the present invention.

### DETAILED DESCRIPTION OF THE DRAWINGS

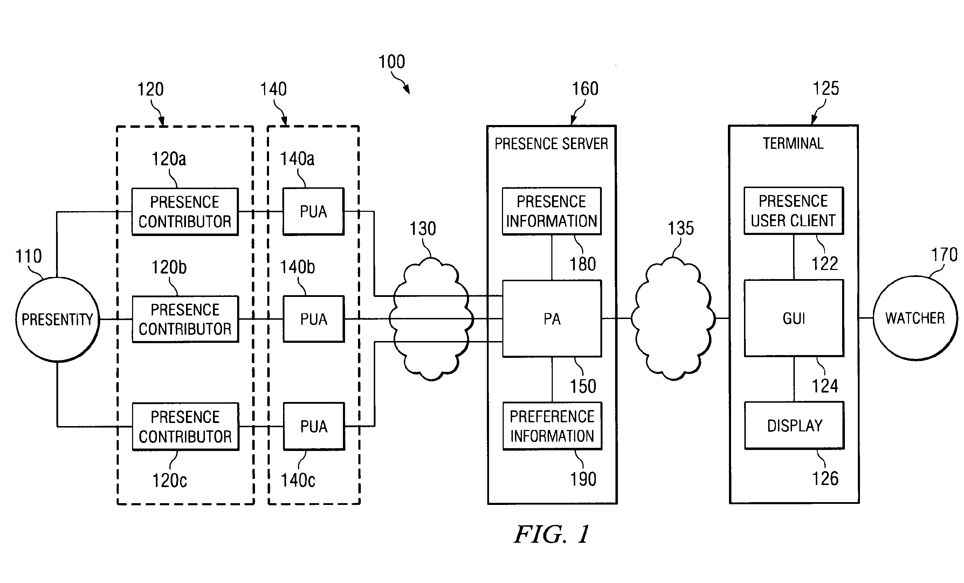

Referring to FIGURE 1, there is illustrated an exemplary presence system 100 capable of implementing various embodiments of the present invention. The presence system 100 includes a presentity 110, one or more presence contributors 120 associated with the presentity 110, one or more presence user agents (PUAs) 140, a presence agent 150, a presence server 160 and one or more watchers 170 of the presentity 110.

In accordance with embodiments of the present invention in which a property management system (PMS) manages a physical property containing a plurality of rooms individually associable with one or more users (e.g., a guest or room occupant) of the property, the presentity 110 represents one of the users of the property, one of the rooms on the property or a service offered by the PMS to the property users. Similarly, the watcher 170 represents a user, a PMS service or an administrator of the PMS. PMS services are defined herein as applications running on PMS service equipment. Examples of PMS service equipment include, but are not limited to, a PBX, voice mail server, pay-per-view server, mini-bar, a billing server and a property management computer/server. Examples of PMS services include, but are not limited to, a room check-in service, a room check-out service, a room change service, in-room phone service, Internet service, housekeeping service, in-room dining service, in-room mini-bar service, in-room pay-per-view service, a text message service, a voice mail service, a wake-up call service, a spa service, a salon service, a billing service and other hospitality services.

The presentity 110 provides presence information 180 indicating the presentity's presence status to the presence system 100. More particularly, each presence contributor 120a-c associated with the presentity 110 provides a portion of the presentity's presence information 180 to the presence system 100. In accordance with embodiments of the present invention, each presence contributor 120a-120c represents an information service associated with the presentity 110. For example, in a presence-enabled PMS, the presence contributors 120a-c can include various PMS services. In an exemplary embodiment, the presence contributors 120a-120c are applications (e.g., software programs) running on one or more physical communication devices, such as a desktop phone, a laptop computer, a personal computer, a computer network server, a cell phone, a personal digital assistant (PDA), a telephony server (e.g., a circuit switch, IP router, gateway, etc.), a web server or any other networked device capable of sending and/or receiving communications over a communications network 130.

However, in general, each presence contributor 120a-120c includes any hardware, software, firmware, or combination thereof for providing presence information to the presence system 100. As an example, each presence contributor 120a-120c could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein.

The PUAs 140 are capable of manipulating and providing the presence information 180 for the presentity 110 to the presence system 100. In FIGURE 1, a separate PUA 140a-c is shown for each presence contributor 120a-c. However, it should be understood that in other embodiments, the number of PUAs 140 can vary based on the number and type of presence contributors 120 and the system configuration. Each PUA 140a-c independently generates a component of the overall presence information for the presentity 110. Each PUA 140 receives presence state information either directly from a presence contributor 120 or through a system with knowledge of the presence state of a presence contributor 120.

Typically, a PUA 140 generates presence information when a change in presence status occurs. In the context of property management systems, examples of changes in presence status include, but are not limited to, room check-in, room check-out, room change, selection of a pay-per-view channel for viewing, removal of one or more items from a mini-bar, origination and/or termination of a local or long-distance telephone call, receiving a request to initiate Internet access, receiving a room service order, delivering a room service order and a receiving a request for a wake-up call.

The presence information from each of the PUAs 140 is collected by one or more presence agents (PAs) 150 within the presence system 100. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110. The PA 150 aggregates the presence information from each of the PUA's 140 and maintains the current complete presence information for the presentity 110.

The PA 150 further provides the presence information to one or more watchers 170 of the presentity 110. Typically, the PA 150 interfaces with a presence user client 122 on a watcher terminal 125 (e.g., desktop phone, cell phone, PDA, desktop computer, laptop computer, etc.) via a communication network 135 to provide the current presence state of the presentity 110 to the watcher 170. For example, the watcher terminal 125 can include a graphical user interface 124 for displaying the real-time presence information on a display 126 of the terminal 125 in the form of icons and/or text strings. In addition, the graphical user interface 124 may also include buttons that enable the watcher 170 to invoke an action, such as initiating an instant message (IM), text message or voice communication session with the presentity 110 or updating the presence information 180 of the presentity 110.

In FIGURE 1, the communications networks 130 and 135 each represent any type of network over which media (circuit-switched or packet-switched voice or data) may be sent. For example, the communications networks 130 and 135 may include one or more of the following: the Public Switched Telephone Network (PSTN), Public Land Mobile Network (PLMN), one or more private local area networks (LANs), the Internet and/or any other type or combination of networks.

The presence server 160 is a physical entity that can operate as either the PA 150 or as a proxy server for routing requests from watchers 170 to the PA 150. The presence server 160 stores the presence information 180 for a plurality of presentities 110. Thus, the PA 150, in combination with the presence server 160, is operable to receive presence information of the presentity 110 from the PUAs 140, receive requests from watchers 170 for the presence information and provide the presence information to the watcher(s) 170. When acting as a PA 150, the presence server 160 can also be co-located with a PUA 140.

The presence server 160 further stores preference information 190 for the presentities 110 and watchers 170 of the presence system 100. For example, in one embodiment, the preference information 190 includes both presentity preference information (e.g., privacy filters) set by the presentity 110 for each watcher 170 and watcher preference information (e.g., watcher filters) set by each watcher 170 for the presentity 110. The preference information 190 serves to filter the presence information 180 of a presentity 110 provided to a watcher 170 to accommodate privacy concerns, prioritization requirements, viewing requirements, administrator policies and security considerations.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a watcher 170 to transmit a SUBSCRIBE request for presence information relating to a particular presentity 110 to the presence server 160 that maintains the presence information for the presentity 110. In operation, the presence server 160 and PA 150 may be co-located with the SIP proxy/registrar for efficiency purposes.

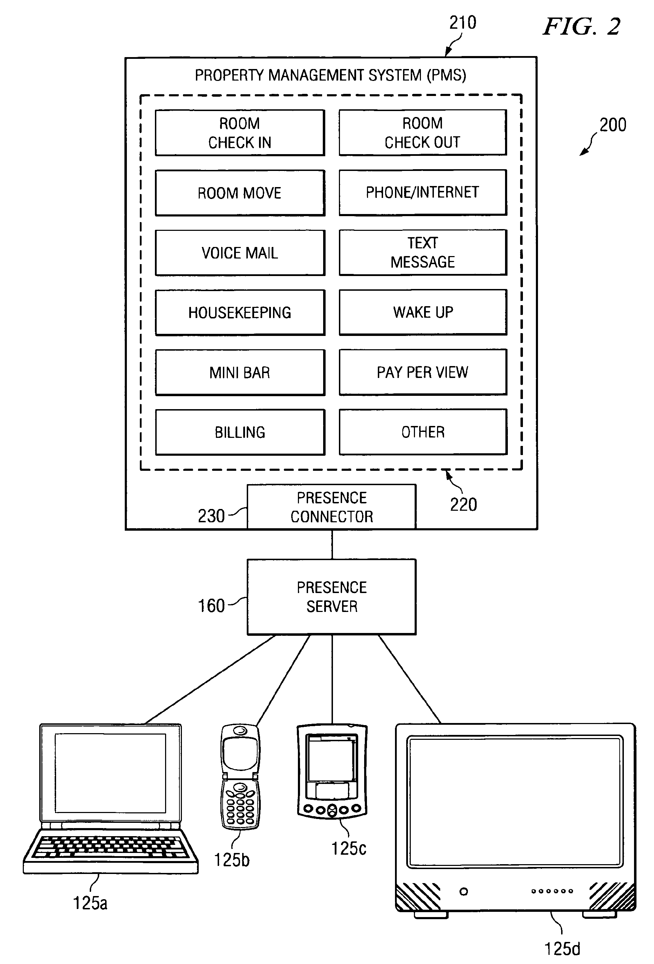

Referring now to FIGURE 2, there is illustrated an exemplary presence-enabled property management system (PMS) 200, in accordance with embodiments of the present invention. The presence-enabled property management system 200 includes a property management system (PMS) 210 providing various PMS services 220 and a presence system (represented by presence server 160) providing presence services. As mentioned above, examples of PMS services 220 include, but are not limited to, room check-in, room check-out, room move, phone/Internet, voice mail, text message, housekeeping, wake-up, mini-bar, pay-per-view, billing and other hospitality-related services.

In FIGURE 2, the PMS 210 is integrated with the presence system through a presence connector 230 that is capable of interfacing with the presence server 160. The presence connector 230 includes any hardware, software, firmware, or combination thereof for interfacing between the PMS 210 and the presence server 160. As an example, the presence connector 230 could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein.

In one embodiment, the presence connector 230 is included within the PMS 210. In another embodiment, the presence connector 230 is a stand-alone system in communication with both the PMS 210 and the presence server 160. In a further embodiment, the presence connector 230 is distributed throughout the PMS 210, such that each PMS service 220 is provided with a dedicated presence connector 230. In this embodiment, the PMS services 220 themselves may be capable of communicating with each other using a presence protocol, such as SIP/SIMPLE.

The presence connector 230 is configured to receive hospitality information from the PMS services 220, to convert the hospitality information into presence information in a presence format (e.g., using SIP/SIMPLE protocol) and to provide the presence information to the presence server 160. The presence information defines respective presence states of one or more of the PMS services. For example, in one embodiment, the presence state of one of the PMS services is representative of the state of the hospitality information received from PMS service 220. As an example, the presence state of an in-room dining service can be "order placed," "order delivered" and/or "current wait time for delivery."

The presence connector 230 is further configured to associate the presence information with one or more presentities. As described above, each presentity can be either a user of the property, a room on the property or a PMS service. For example, if a particular presentity is a room, the presence information associated with that room can include the presence state of several PMS services associated with the room, such as whether a user has checked into the room, the current status of any in-room dining service ordered for that room, whether housekeeping has finished cleaning the room and whether a mini-bar or pay-per-view purchase has been made in the room. Thus, if the presence connector 230 receives service information from the housekeeping PMS service 220 indicating that the room has been cleaned, the presence connector 230 can update the presence information for the room to indicate that the room has been cleaned.

As another example, if a particular presentity is a user, the presence information associated with that user can include the presence state of several PMS services associated with the user, such as what room the user is currently checked into, whether the user has moved rooms, the current status of any in-room dining service ordered by the user, whether housekeeping has finished cleaning the user's room and whether a mini-bar or pay per view purchase has been made by the user. Thus, if the presence connector 230 receives service information from the housekeeping PMS service 220 indicating that the room associated with a particular user has been cleaned, the presence connector 230 can update the presence information for the user to indicate that the room has been cleaned.

As a further example, if a particular presentity is a PMS service 220, the presence information associated with that PMS service can include the presence state of the PMS service and/or the presence state of one or more subpresentities (e.g., users or rooms) associated with the PMS service. For example, if the presentity is the housekeeping PMS service 220, the presence information can indicate whether housekeeping has finished cleaning each of the rooms on the property. Thus, if the presence connector 230 receives service information from the housekeeping PMS service 220 indicating that a particular room associated has been cleaned, the presence connector 230 can update the presence information for the housekeeping PMS service 220 to indicate that that room has been cleaned.

The presence server 160 stores the received presence information and provides the received presence information to one or more watcher terminals 125. As used herein, the term watcher terminal 125 includes any terminal on which a presence user client is running that is capable of displaying the presence information, as described above in connection with FIGURE 1. Examples of watcher terminals 125 include, but are not limited to, a computer 125a, a cell phone 125b, a PDA 125c and a television 125d.

The amount and type of presence information 180 provided to each watcher terminal 125 is dependent upon preference information of both the presentity and the watcher. For example, the presence server 160 may provide the presence information 180 to the watcher terminals 125 in a visual and/or audible format. Thus, the presentation of the presence information 180 to the watcher terminal 125 is customizable by the presentity, watcher and/or presence system administrator by defining preference information, as described above in connection with FIGURE 1.

As further described above in connection with FIGURE 1, each watcher can be either a user, a PMS service or an administrator of the PMS. For example, if a particular watcher is a user, the user can view the presence information associated with the room and/or the user on the user's terminal 125. As an example, the user's terminal (e.g., cell phone 125b or PDA 125c) can display whether the room has been cleaned, the estimated time for delivery of in-room dining service, the current value of the user's bill, reservations for a restaurant, spa or salon and the presence state of other PMS services. In a further embodiment, a graphical user interface on the watcher terminal 125 enables the watcher to invoke or access one or more PMS services 220 using the displayed presence information. For example, if the watcher is a user, the user's terminal 125 can display links or buttons that initiate e-mail, text or voice communication sessions with various PMS services and/or link to one or more websites for various PMS services 220, such as housekeeping, in-room dining, restaurants, spa, salon, billing, check-in, check-out and other PMS services.

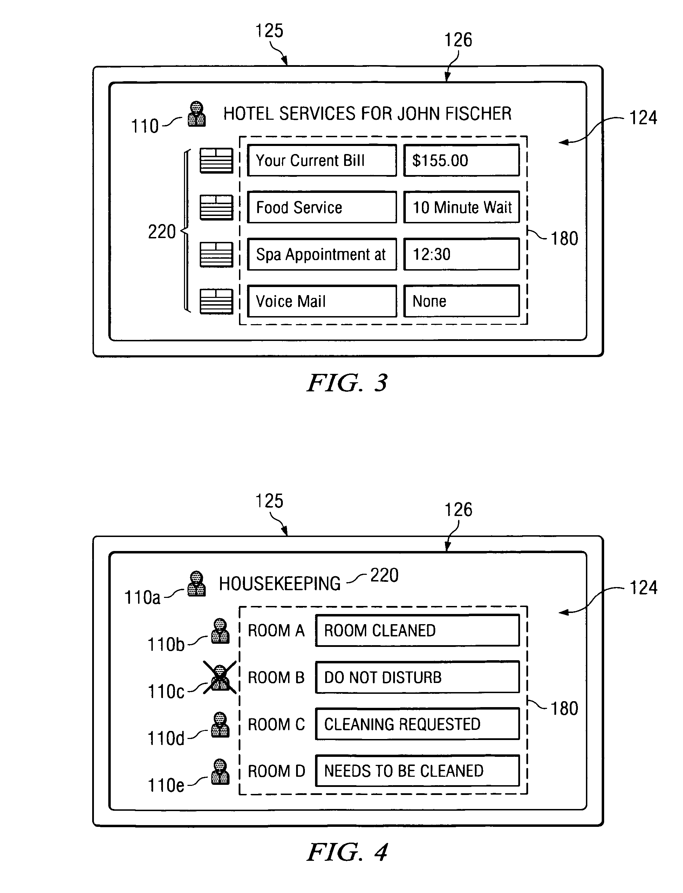

Examples of presence information 180 displayed on watcher terminals 125 are shown in FIGURE 3 and FIGURE 4. The watcher terminals in FIGURE 3 and FIGURE 4 each include a display 126 and a graphical user interface 126 for displaying the presence information 180 on the display 126. In FIGURE 3, the graphical user interface 124 displays the presence information 180 for a user presentity (John Fischer) 110. The presence information 180 indicates the presence state of one or more PMS services 220 associated with John Fischer 110. For example, as shown in FIGURE 3, the presence information 180 includes the presence state of the following PMS services 220: billing, in-room dining, spa and voice mail. The presence state of the billing service indicates that the current amount of the user's bill is $155.00, the presence state of the in-room dining service indicates that there is currently a 10 minute wait to receive in-room dining service, the presence state of the spa service indicates that the user has a spa appointment at 12:30 and the presence state of the voice mail service indicates that the user does not currently have any voice mail messages.

In FIGURE 3, the presence information 180 is presented as a combination of text and icons. The icons can be standard icons provided by the presence-enabled PMS 200 or customized icons that are customizable by the user, PMS administrator and/or presence server. Each icon represents a link to the respective PMS service 220 to view additional presence state information associated with the PMS service and/or to initiate a communication session with the PMS service. It should be understood that the icons are merely included as an exemplary tool for accessing a PMS service, and that the links to PMS services may be realized by physical buttons, virtual buttons or other tools.

For example, in one embodiment, the presence information 180 for a particular PMS service 220 can contain two or more levels of presence information, and when the icon associated with that particular PMS service is "clicked on," the graphical user interface 124 presents a new screen with additional levels of presence information 180 for that PMS service. As an example, if the user presentity 110 desires additional detail on his or her bill, the user presentity 110 can "click on" the icon next to the billing service to retrieve additional billing information. In another embodiment, the icon associated with a particular PMS service 220 launches an e-mail application, URL, text message application, voice call application or other link to enable the user presentity 110 to access that PMS service 220. As an example, if the user presentity 110 desires to change the time of his or her spa appointment, the user presentity 110 can "click on" the icon associated with the spa service to initiate a text message, e-mail message or voice call to the spa. As another example, if the user presentity 110 desires to order room service, the user presentity 110 can "click on" the icon associated with room service to view a website containing the menu and to place an order.

In FIGURE 4, the graphical user interface 124 displays the presence information 180 for a PMS service presentity 110a (Housekeeping 220). The presence information 180 indicates the presence state of one or more subpresentities (rooms) 110b-110e associated with the Housekeeping service presentity 110a. For example, as shown in FIGURE 4, the presence information 180 includes the presence state of Room A, Room B, Room C and Room D. The presence state of Room A indicates that Room A has already been cleaned, the presence state of Room B indicates that the housekeeping is not to enter the room (i.e., "Do Not Disturb"), the presence state of Room C indicates that Room C has requested cleaning and the presence state of Room D indicates that Room D has not yet been cleaned.

In FIGURE 4, the presence information 180 is again presented as a combination of icons and text. Each icon represents a different room sub-presentity 110a-110e. The icons are in the form of a person, and have an "X" marked through them if that room is unavailable for cleaning. Thus, in FIGURE 4, Room B is currently unavailable for cleaning, while Rooms A, C and D are currently available for cleaning. Each icon may further represent a link to the respective room sub-presentity to view additional presence state information associated with the room sub-presentity and/or to update the presence information associated with that room sub-presentity. For example, if housekeeping has completed cleaning Room C, housekeeping personnel can "click on" the icon 110d for Room C to change the presence state of Room C to "Room Cleaned."

It should be understood that the icons can be standard icons provided by the presence-enabled PMS 200 or customized icons that are customizable by the user, PMS administrator and/or presence server. In addition, it should be understood that the icons are merely included as an exemplary tool for accessing a particular room sub-presentity, and that such links may be realized by physical buttons, virtual buttons or other tools.

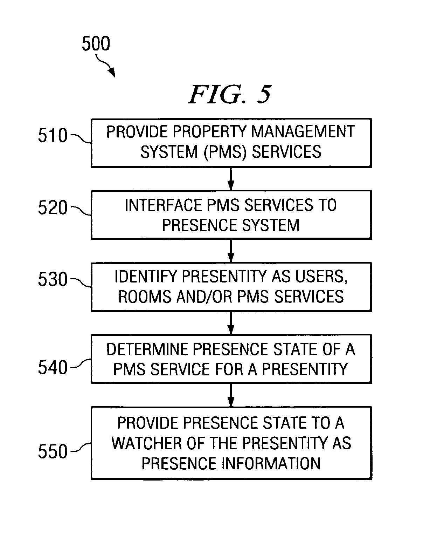

FIGURE 5 is a flowchart illustrating an exemplary process 500 for implementing a presence-enabled property management system, in accordance with embodiments of the present invention. At block 510, various property management (PMS) services are provided by a property management system. Thereafter, at block 520, the PMS services are interfaced to a presence system that is capable of maintaining presence information on presentities associated with the PMS. For example, the presence information of each of the presentities can define respective states of one or more of the PMS services.

Once the PMS services are interfaced with the presence system, at block 530, the presence system identifies the various presentities for which presence information will be maintained. For example, the presentities can be users of the property (e.g., guests or room occupants), rooms on the property and/or PMS services. At block 540, the presence state of at least one PMS service is determined for an identified presentity, and at block 550, the determined presence state is provided to a watcher of the presentity as the presence information of that presentity.

The following features, separately or in any combination, may also constitute advantageous embodiments of the described or claimed invention:
- The claimed and/or described system, wherein said presence connector is operable to communicate with said presence server using a presence protocol.
- The claimed and/or described method, further comprising: receiving said presence information from said presence server at a terminal associated with a select one of said watchers; and displaying said presence information on said terminal.
- The claimed and/or described method, further comprising: enabling said select one of said watchers to invoke one or more of said PMS services using said displayed presence information.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A presence-enabled property management system (PMS) for managing a physical property containing a plurality of rooms individually associable with one or more users of the property, said presence-enabled PMS including a plurality of PMS services (220) available to said users, wherein said presence-enabled PMS is **characterized by**:
a presence server (160) operable to maintain respective presence information (180) on presentities (110) associated with said presence-enabled PMS, each said presence information (180) on each of said presentities (110) defining respective presence states of one or more of said PMS services (220), said presence server (180) being further operable to provide said presence information (180) in real-time to watchers (170) of said presentities (110); and
a presence connector (230) in communication with said plurality of PMS services (220) to receive hospitality information associated with said PMS services (220), to convert said hospitality information into said presence information (180) and to provide said presence information (180) to said presence server (160).

2. The system of Claim 1, wherein said PMS services (220) include one or more of a room check-in service, a room check-out service, a room change service, in-room phone service, Internet service, housekeeping service, in-room dining service, in-room mini-bar service, in-room pay per view service, a text message service, a voice mail service, a wake-up call service, a spa service, a salon service, a billing service and other hospitality services.

3. The system of Claim 2, wherein said presence state of one of said PMS services (220) is representative of the state of said hospitality information associated with said one of said PMS services (220).

4. The system of Claim 1, wherein one of said presentities (110) is one of said users, one of said rooms or one of said PMS services (220), and wherein one of said watchers (170) is one of said users, one of said PMS services (220) or an administrator of said PMS.

5. The system of Claim 1, wherein said presence connector (230) includes multiple presence connectors, each associated with a different one of said PMS services (220).

6. The system of Claim 1, further comprising:
a presence user client (122) associated with a select one of said watchers (170) operable to receive said presence information (180) from said presence server (160) and to provide said presence information (180) to said select one of said watchers (170); and
a terminal (125) on which said presence user client (122) is running, said terminal (125) having a display (126) and including a graphical user interface (124) operably coupled to display said presence information (180) on said display (126);
wherein said graphical user interface (124) is further operably coupled to said presence user client (122) to enable said select one of said watchers (170) to invoke one or more of said PMS services (220) using said displayed presence information (180).

7. A method for implementing a presence-enabled property management system (PMS) for managing a physical property containing a plurality of rooms individually associable with one or more users of the property, wherein said PMS provides a plurality of PMS services (220) to said users, and wherein said method is **characterized by**:
interfacing (520) said PMS services (220) to a presence system (100) capable of maintaining respective presence information (180) on presentities (110) associated with said presence-enabled PMS, each said presence information (180) of each of said presentities (110) defining respective states of one or more of said PMS services (220); and
providing (550) said presence information (180) in real-time to watchers (170) of said presentities (110).

8. The method of Claim 7, further comprising:
identifying (530) said presentities (110) as one or more of said users, said rooms and said PMS services (220); and
identifying said watchers (170) of each of said presentities (110) as one or more of said users, said PMS services (220) and administrators of said PMS.

9. The method of Claim 8, further comprising:
determining (540) a current presence state of one of said PMS services (220) associated with one of said presentities (220), said current presence state identifying hospitality information associated with said one of said PMS services (220).

10. The method of Claim 7, wherein said interfacing (520) further comprises:
communicating with said presence system (100) using a presence protocol; and
communicating with said PMS services (220) using a proprietary protocol.
